# EUROPÄISCHE PATENTANMELDUNG

(11) **EP 2 031 169 A2**
(43) Veröffentlichungstag der Anmeldung: **04.03.2009**
(21) Anmeldenummer: 08015104.6
(22) Anmeldetag: 27.08.2008
(51) Int. Cl.: E06B 1/28, E06B 1/32, E06B 3/22

(54) **Hohlkammerprofil**

(30) Priorität: 27.08.2007 AT 13302007
(71) Anmelder: IFN-Holding AG, 4050 Traun (AT)
(72) Erfinder: König, Engelbert, 4533 Piberbach (AT); Mattischek, Johann Peter, 4050 Traun (AT)
(74) Vertreter: Burger, Hannes

(57) **Zusammenfassung**

Die Erfindung betrifft ein Hohlkammerprofil (1) mit einem Profilkörper (2) aus Kunststoff, in dem ein Versteifungsprofil (3) angeordnet ist. Das Versteifungsprofil (3) ist aus einem mit Naturstoffteilchen, ausgewählt aus einer Gruppe umfassen Holz, Cellulose, Sisal, Manila, Hanf, Jute, verstärkten Kunststoff gebildet.

## Beschreibung

Die Erfindung betrifft ein Hohlkammerprofil mit einem Profilkörper aus Kunststoff, in dem ein Versteifungsprofil angeordnet ist, ein Fenster mit einem Fensterrahmen, in dem ein Glas-element gehaltert ist, wobei der Fensterrahmen durch ein Hohlkammerprofil gebildet ist, eine Tür mit einem Türrahmen der durch ein Hohlkammerprofil gebildet ist sowie einen Blendrahmen aus einem Hohlkammerprofil für ein Fenster oder eine Tür.

Gattungsgemäße Hohlkammerprofile für Fenster oder Türen sind im Stand der Technik bereits vielfach beschrieben. Diese Hohlkammerprofile weisen eine oder mehrere Hohlkammern auf, wobei die einzelnen Hohlkammern durch Stege voneinander getrennt sind. Diese Stege sind üblicherweise hinsichtlich ihrer Wandstärke dünner ausgeführt als die äußeren Wände des Profils, um damit einerseits Material und Gewicht einzusparen und andererseits die Wärmeleitung über die Stege zur besseren Wärmedämmung des Profils zu minimieren. Damit verbunden ist allerdings, dass der Profilkörper an sich keine ausreichende mechanische Belastbarkeit aufweist. Aus diesem Grund werden in diesen Hohlkammerprofilen Versteifungsprofile angeordnet, die üblicherweise aus Metall bestehen. Nachteilig an diesen Metallprofilen ist, dass Metalle eine sehr gute Wärmeleitfähigkeit aufweisen und damit der Wärmedämmwert des Profils verschlechtert wird.

Aus der DE 198 43 742 A1 ist weiters ein Kunststoffprofil für Fensterflügel- oder Blendrahmen- oder Türprofile bekannt, dass aus mehreren Hohlprofilelementen zusammengesetzt ist. Dabei ist wenigstens ein der Aussteifung dienender Profilkern sowie, bezogen auf die Einbaulage des Profils, wenigstens eine Innenschale und wenigstens eine Außenschale vorgesehen. Die Innenschale und die Außenschale werden mit dem Profilkern entweder verklebt oder durch miteinander komplementär ausgebildete Verbindungsbereiche versehen. Der Profilkern und die Innenschale bzw. die Außenschale sind aus unterschiedlichen Kunststoffen gebildet, wobei der Profilkern aus einem Recyclingkunststoff bestehen kann und zur Erhöhung der Aussteifung eine wabenförmige Querschnittsstruktur aufweisen kann. Es ist weiters vorgesehen den Profilkern aus einem glasfaserverstärktem Kunststoff oder aus einem Schichtstoff herzustellen. Glasfasern sind jedoch in der Verarbeitung nicht unproblematisch, so dass besondere Arbeitsschutzmaßnahmen getroffen werden müssen. Darüber hinaus ist die Wiederverwertbarkeit derartiger Verbundstoffe nur bedingt und mit größerem Aufwand möglich.

Aus der DE 10 2005 051 957 A1 ist es weiters bekannt, coextrudierte Hohlkammerprofile aus mindestens einem ersten Kunststoff und einem zweiten Kunststoff herzustellen, wobei der erste Kunststoff die Kernkomponente und der zweite Kunststoff eine Deckschicht des Profils bildet. Im Kunststoff der dünnen Deckschicht, der unter anderem aus PVC, PE oder PP besteht, sind Holzspäne oder Holzmehl eingearbeitet, um damit das optische Erscheinungsbild dieser Hohlkammerprofile an jenes von Holz anzupassen. Diese Holzkunststoffgemische sind auch unter der Bezeichnung WPC (Wood Plastic Composits) bekannt.

Die DE 693 22 948 T2 beschreibt ein Verfahren zur Herstellung eines Pellet-Verbundwerkstoffes, der zumindest 30 % eines thermoplastischen Polymers und 30 % Cellulosefasern enthält. Diese Pellets können in der Herstellung von Konstruktionselementen von Fenster- oder Türkomponenten eingesetzt werden.

Die EP 1 173 512 B1 beschreibt ein wetterbeständiges, mechanisch stabiles, dünnwandiges Hohlprofil mit einem Verbundwerkstoff der ca. 20 bis ca. 50 Gew.-% einer Polyolefinpolymerzusammensetzung mit einem Schmelzindex von mindestens ca. 1,2 gm/10 min, ein Schmelzpunkt von 145°C bis 158°C, 0,01 bis 5 Gew.-% eines maleinsäureanhydridgepfropften Polyolefins mit 1 bis 100 Mol Maleinsäureanhydrid pro Mol Polyolefin, und mehr als 50 bis 80 Gew.-% einer Holzfaser enthält, wobei die Faser einen Feuchtigkeitsgehalt von unter 5.000 Teilen Wasser pro Million Teile des Profils, eine Partikelgröße von ca. 100 bis ca. 2.000 µm und ein Höhen-Breitenverhältnis von 2 bis 5 aufweist, wobei das Profil ein extrudiertes komplexes Hohlteil mit einer festgelegten Stützrichtung und einer Wanddicke von unter ca. 5 mm umfasst, der Biegemodul des Profils höher ist als ca. 5.10⁵ psi (ASTM D 790), die Formbeständigkeitstemperatur des Profils in der festgelegten Stützrichtung bei 264 psi (ASTM D 696) über ca. 75°C beträgt und der Verbundwerkstoff ein Zugmodul von mindestens ca. 8.10⁵ psi (ASTM D 3039) umfasst.

Die DE 693 23 673 T2 beschreibt eine Strukturelement umfassend ein Verbundmaterial aus einem Vinylchlorid enthaltenden Polymer und Holzfasern, das geeignet ist zur Verwendung als Strukturelement zur Herstellung eines Fensters oder einer Tür, wobei das Strukturelement ein Hohlprofil mit einer definierten Trägerrichtung umfasst und die Druckfestigkeit des Elementes in Trägerrichtung größer ist als etwa 1.500 psi ist, wobei die Holzfasern in einer kontinuierlichen Phase dispergiert sind, in der das Polyvinylchlorid die Holzfasern benetzt und in diese einbringt, wobei die Menge an Holzfasern und Polymer jeweils mindestens etwa 30 Gew.-% beträgt, und wobei das Element ein Modul von mindestens etwa 500.000 psi hat.

Aufgabe der vorliegenden Erfindung ist es, den Wärmedämmwert eines Fensters oder einer Tür mit Kunststoffrahmen zu verbessern.

Gelöst wird diese Aufgabe durch ein Hohlkammerprofil, bei dem das Versteifungsprofil aus einem mit Naturstoffteilchen, ausgewählt aus einer Gruppe umfassend Holz, Cellulose, Sisal, Manila, Hanf, Jute, verstärkten Kunststoff gebildet ist, sowie eigenständig durch ein Fenster bzw. eine Tür bzw. einen Blendrahmen bei denen das Hohlkammerprofil erfindungsgemäß ausgebildet ist.

Durch die Ausbildung des Versteifungsprofils als WPC wird eine zusätzliche Barriere gegen Wärmeverlust aufgrund der schlechten Wärmeleitung erreicht. Der Innen- und der Außenbereich des Fensters sind also zusätzlich thermisch getrennt. Zudem wird durch die Naturstoffpartikelverstärkung eine bessere Statik zur Gewichtsabtragung erzielt, so dass das Hohlkammerprofil auch in größeren Fenstern oder Türen, bspw. Schallschutzfenstern mit Dreifachverglasung, welche ein höheres Gewicht aufweisen, eingesetzt werden kann. Von Vorteil ist dabei auch, dass das WPC, so wie der Kunststoff für den Profilkörper des Hohlkammerprofils selbst, im Vergleich zu bisher üblichen Metalleinlagen als Verstärkung eine geringe thermische Ausdehnung aufweist, so dass das Entstehen von Spannungen innerhalb des Hohlprofils aufgrund von Temperaturschwankungen über die Jahreszeiten vermieden bzw. verringert wird. Durch die Verwendung von Naturstoffpartikel als Verstärkungspartikel für das Versteifungsprofil ist nicht nur die Verarbeitung in Hinblick auf den Arbeitsschutz erleichtert, sondern können damit auch Rest- bzw. Abfallstoffe eingesetzt werden, bspw. in Form von Sägemehl, so dass die Herstellkosten für derartige Hohlkammerprofile gesenkt werden können. Darüber hinaus wird damit auch die Recyclingfähigkeit des Hohlkammerprofils verbessert, insbesondere wenn für den Profilkörper und das Versteifungsprofil Kunststoffe mit ähnlichen bzw. gleichen Eigenschaften verwende werden, insbesondere Kunststoffe aus derselben Kunststoffklasse, wie z.B. PVC, PE oder PP. Es wird damit auch eine bessere Schraubfestigkeit für an das Hohlkammerprofil anzubringende weitere Bauteile, wie z.B. Beschläge oder dgl. erreicht, in dem die Schrauben bis in den Versteifungskörper eingetrieben werden können. Darüber hinaus ist aber auch die Montierbarkeit von weiteren Bauteilen an sich vereinfacht, da im Vergleich zu Versteifungsprofilen aus Stahl das Einschrauben mit deutlich geringerem Kraftaufwand bzw. ohne zusätzliche Bohrer, etc., erfolgen kann. Es ist weiters möglich, damit die Eckfestigkeit derartiger Fenster- oder Tür- bzw. Blendrahmen zu verbessern, da das Versteifungsprofil - anders als dies im Stand der Technik für Metallversteifungsprofile derzeit der Fall ist - sich bis in die Eckbereiche erstrecken kann und ggf. mitverschweißt werden kann oder ggf. passgenau abgefräst werden kann. Die maximale Versteifungslänge bei heute üblichen Versteifungsprofilen aus Metall ist ca. 5 cm kürzer, eben um die Verschweißung im Eckbereich der Hohlkammerprofile zur Herstellung von Fenster- oder Blendrahmen zu ermöglichen, wodurch sich diese Profile aus dem Stand der Technik im Laufe der Zeit sichtbar absenken. Weiters wird dem erfindungsgemäßen Profil die Gefahr vermindert, dass das Versteifungsmaterial beim Verschweißen im Eckbereich sichtbar wird oder den Kunststoff des Profilkörpers durchdringt. Es kann damit also das Verschweißen an sich vereinfacht werden.

Gemäß einer Ausführungsvariante der Erfindung ist vorgesehen, dass das Versteifungsprofil ebenfalls als Hohlkammerprofil ausgebildet ist. Es wird damit eine weitere Erhöhung des Wärmedämmwertes eines Fensters oder einer Tür erreicht. Zudem ist eine entsprechende Gewichtsreduzierung des fertigen Fensters bzw. der Tür möglich.

Andererseits ist es auch möglich, dass im Profilkörper zumindest zwei Versteifungsprofile angeordnet sind, wodurch ebenfalls der Wärmedämmwert des Hohlkammerprofils verbessert werden kann und zudem auch die Statik des Hohlkammerprofils entsprechend an die Belastungen angepasst werden kann, in dem bspw. unterschiedliche Profilquerschnitte für die zumindest zwei Versteifungsprofile eingesetzt werden bzw. diese Versteifungsprofile sehr genau an jenen Bereichen platziert werden können, an denen diese Belastungen auftreten. Gegebenenfalls ist damit aber auch eine weitere Gewichtsreduzierung des fertigen Hohlkammerprofils bzw. des fertigen Fensters oder der Tür erreichbar.

Bevorzugt sind die zumindest zwei Versteifungsprofile zueinander beabstandet im Profilkörper angeordnet, um die Wärmedämmung des Hohlkammerprofils weiter zu verbessern.

Zur einfacheren Montage der Versteifungsprofile im Hohlkammerprofil können diese zumindest zwei Versteifungsprofile miteinander verbunden sein, wobei durch die Verbindung auch eine Verbesserung der Statik bzw. der mechanischen Belastbarkeit des Hohlkammerprofils erreicht werden kann.

An zumindest einer Oberfläche des Versteifungsprofils kann ein Schaumstoff angeordnet sein, insbesondere mit dem Versteifungsprofil verbunden sein, wodurch Ausbildungen für Niedrigstenergiehäuser bzw. Passivhäuser erreicht werden können.

Dieser Effekt kann auch damit erreicht werden, wenn Zwischenräume, die zwischen dem Versteifungsprofil und dem Profilkörper ausgebildet sind, von einem Schaumstoff zumindest annähernd vollständig ausgefüllt sind.

Es ist weiters möglich, insbesondere für die bessere Lastabtragung bzw. zur Erhöhung der Gebrauchsdauer des Hohlkammerprofils, wenn das oder die Versteifungsprofile mit dem Profilkörper des Hohlkammerprofils verbunden ist bzw. sind.

Zur Erhöhung der Belastbarkeit und um damit das Hohlkammerprofil für höchste Belastungen auszurüsten, ist es möglich, dass in dem oder in den Versteifungsprofil(en) zumindest eine metallische Aussteifung angeordnet ist.

Weiters ist es möglich, dass der Profilkörper und/oder das bzw. die Versteifungsprofile zumindest teilweise ausgeschäumt sind, wodurch nicht nur der Wärmedämmwert dieses Hohlkammerprofils wiederum verbessert ist, sondern zudem auch eine Verbindung des bzw. der Versteifungsprofile mit dem Profilkörper auf einfache Weise erzielt werden kann.

Schließlich ist es möglich, dass das oder die Versteifungsprofil(e) zumindest teilweise eine Wandstärke aufweist bzw. aufweisen, im Querschnitt betrachtet, die zwischen 80 % und 150 % der Außenwandstärke des Profilkörpers beträgt, wodurch die Lastabtragung und die Ausziehfestigkeit von Schrauben verbessert werden kann, so dass keine zusätzlichen Metallversteifungen erforderlich sind, welche die Wärmedämmung des Hohlkammerprofils beeinträchtigen würden.

Zum besseren Verständnis der Erfindung wird diese anhand der nachfolgenden Figuren näher erläutert.

Es zeigen jeweils in stark schematischer Vereinfachung:
- Fig. 1: ein Hohlkammerprofil mit einem Versteifungsprofil, im Querschnitt;
- Fig. 2: die Ausführung nach Fig. 1 mit zusätzlicher metallischer Versteifung;
- Fig. 3: eine Ausführungsvariante eines Hohlkammerprofils mit Versteifungsprofil, im Querschnitt;
- Fig. 4: eine Ausführungsvariante des Hohlkammerprofils mit Versteifungsprofil mit zu- sätzlicher metallischer Aussteifung, im Querschnitt;
- Fig. 5: ein Hohlkammerprofil mit zwei Versteifungsprofilen, im Querschnitt;
- Fig. 6: die Ausführungsvariante nach Fig. 5 mit zusätzlicher metallischer Versteifung in den Versteifungsprofilen;
- Fig. 7: eine Ausführungsvariante eines Hohlkammerprofils mit Versteifungsprofil, im Querschnitt;
- Fig. 8: ein Hohlkammerprofil mit ausgeschäumtem Versteifungsprofil im Querschnitt;
- Fig. 9: eine Ausführungsvariante des Hohlkammerprofils nach Fig. 8;
- Fig. 10: ein Hohlkammerprofil mit zwei Versteifungsprofilen zwischen denen ein Schaumstoff angeordnet ist, im Querschnitt;
- Fig. 11: ein Hohlkammerprofil mit Versteifungsprofil, welches von einem Schaumstoff umgeben ist, im Querschnitt;
- Fig. 12: eine Ausführungsvariante des Hohlkammerprofils mit Versteifungsprofil mit au- ßen angeordneter Abdeckschale, im Querschnitt;
- Fig. 13: eine Ausführungsvariante zu jener nach Fig. 12;
- Fig. 14: eine Ausführungsvariante zu jener nach Fig. 12;
- Fig. 15: einen Ausschnitt aus einem Fenster, im Querschnitt;
- Fig. 16: eine Ausführungsvariante zu jener nach Fig. 15;
- Fig. 17: eine Ausführungsvariante zu jener nach Fig. 15;
- Fig. 18: eine Ausführungsvariante eines Hohlkammerprofils mit Versteifungsprofil, im Querschnitt;
- Fig. 19: eine Ausführungsvariante des Hohlkammerprofils nach Fig. 18 im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen, unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7 oder 3,2 bis 8,1 oder 5,5 bis 10.

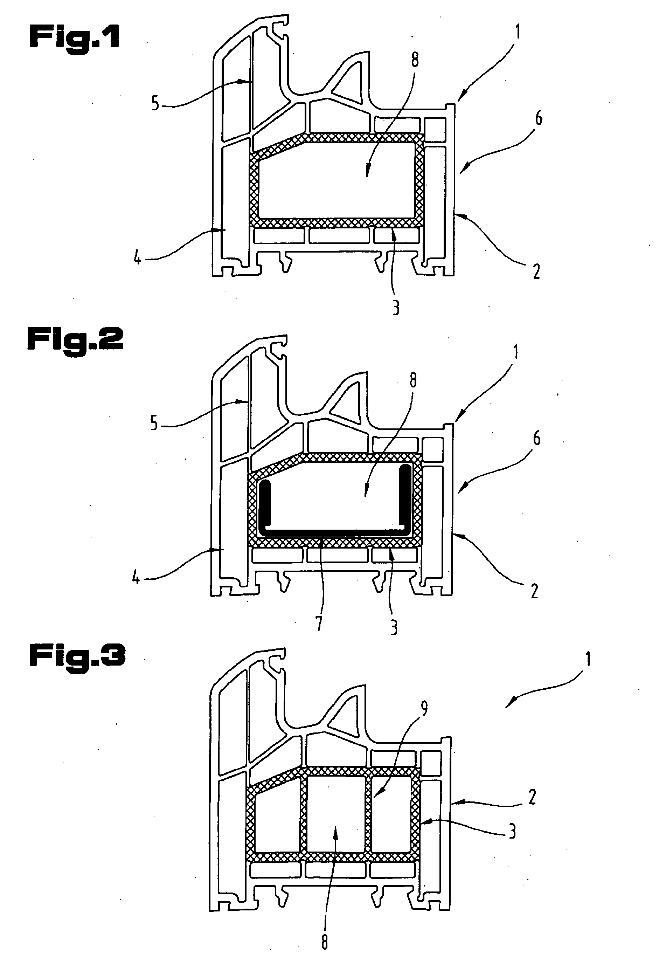

In Fig. 1 ist ein Hohlkammerprofil 1 dargestellt, dass einen Profilkörper 2 aus Kunststoff aufweist. In diesem Profilkörper 2 ist ein Versteifungsprofil 3 angeordnet.

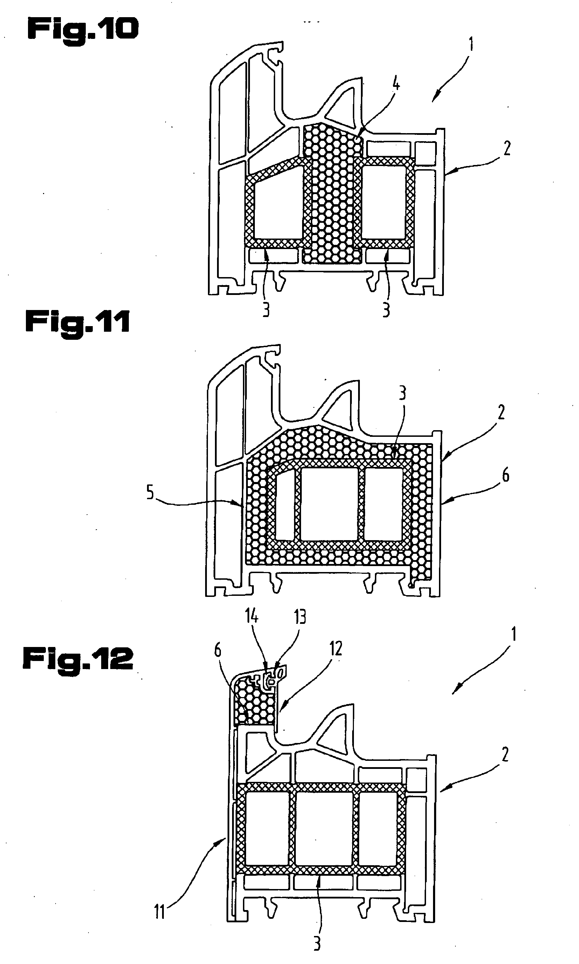

"im" bedeutet im Rahmen der Erfindung, dass dieses Versteifungsprofil 3 - wie dies aus Fig. 1 ersichtlich ist - zur Gänze innerhalb des Profilkörpers 2 angeordnet ist bzw. kann der Profilkörper 2 auch einseitig offen ausgebildet sein - wie dies aus Fig. 12 ersichtlich ist - so dass also das Versteifungsprofil 3 nicht allseitig vom Profilkörper 2 umgeben ist.

Das Hohlkammerprofil 1, das heißt der Profilkörper 2, weist mehrere Hohlkammern 4 auf, die durch Stege 5 voneinander getrennt sind bzw. teilweise durch Außenwände 6 begrenzt werden. Die Stege 5 können dabei horizontal, vertikal bzw. geneigt gegen die Horizontale ausgebildet sein. Derartige Hohlkammerprofile 1 sind aus dem Stand der Technik bereits bekannt und sei daher der Fachmann an die einschlägige Fachliteratur hierzu verwiesen.

Der Profilkörper 2 besteht aus einem Kunststoff, insbesondere einem thermoplastischen Kunststoff, wie zum Beispiel PVC, PP, ASA (Acrylnitril-Styrol-Acrylester Thermoplat), ABS (Acrylnitril-Butadien-Styrol-Terpolymer).

Prinzipiell kann der Profilkörper 2 jeden beliebigen geeigneten Querschnitt aufweisen, insbesondere als Fensterrahmenprofil, Türrahmenprofil oder Blendrahmenprofil ausgebildet sein. Mit anderen Worten ist also die Erfindung nicht auf die dargestellten Querschnitte der Profile beschränkt.

Obwohl die bevorzugte Ausführung des Hohlkammerprofils 1 als Profil für die Verwendung in der Fensterindustrie ist, besteht im Rahmen der Erfindung auch die Möglichkeit, das Hohlkammerprofil 1 für andere Verwendungszwecke, wie bspw. Fassadenelemente, Sonnenschutzprofile, Rollladenprofile, Fensterladenprofile, auszubilden und den Querschnitt entsprechend zu gestalten.

Erfindungsgemäß wird das Versteifungsprofil 3 aus einem Kunststoff als Matrixmaterial gebildet, in dem Naturstoffteilchen enthalten sind. Diese Naturstoffteilchen werden insbesondere ausgewählt aus einer Gruppe umfassend Holz, Cellulose, Sisal, Manila, Hanf, Jute. Es wird damit eine Verstärkung des Matrixmaterials erreicht. Als Matrixmaterial wird insbesondere ein thermoplastischer Kunststoff, wie z.B. PVC, Polyolefine, z.B. PE oder PP oder Copolymerisate daraus, PS, Polyacryl, Polyester, verwendet, da damit auch eine einfache Anbindung des Versteifungsprofils 3 an den Profilkörper 2 ermöglich wird, bspw. durch Verschweißen oder während der Herstellung durch Coextrusion. Jedoch besteht auch die Möglichkeit als Kunststoff ein Duroplast zu verwenden.

Die Naturstoffteilchen sind bevorzugt faserartig ausgebildet, können aber auch pulverförmig sein, z.B. in Form eines Sägemehls. Die Fasern selbst können eine Faserlänge aufweisen ausgewählt aus einem Bereich mit einer unteren Grenze von 100 µm und einer oberen Grenze von 7000 µm. Insbesondere werden Holzfasern verwendet.

Ebenso ist es möglich, dass die Fasern eine Länge aufweisen, ausgewählt aus einem Bereich mit einer unteren Grenze von 150 µm und einer oberen Grenze von 5000 µm bzw. einer unteren Grenze von 250 µm und einer oberen Grenze von 3500 µm.

Obwohl prinzipiell sämtliche Holzarten verwendbar sind, wie z.B. Fichte, ist es im Rahmen der Erfindung insbesondere möglich, Harthölzer, wie z.B. Lärche; Eiche, Kiefer, Douglasie, Robinie, Nuss, Birne, Bangkirai, Iroko, Rot-Zeder, Teak, Massaranduba, Yellow Balau, zu verwenden.

Der Anteil der Naturstoffteilchen an dem Kunststoffgemisch des Versteifungsprofils 3 ist bevorzugt ausgewählt aus einem Bereich mit einer unteren Grenze von 20 Gew.-% und einer oberen Grenze von 75 Gew.-%. Unterhalb von 20 Gew.-% ist die Tragfähigkeit des Versteifungsprofils 3 nicht mehr ausreichend, oberhalb von 75 Gew.-% wird der Zusammenhalt der Kunststoffmatrix/Naturstoffteilchenmischung zu sehr beeinträchtigt, wodurch sich ebenfalls negative Auswirkungen auf die Festigkeit ergeben.

Der Anteil der Naturstoffteilchen an dem Gemisch des Versteifungsprofils 3 kann auch ausgewählt werden aus einem Bereich mit einer unteren Grenze von 30 Gew.-% und einer oberen Grenze von 65 Gew.-% bzw. ausgewählt werden aus einem Bereich mit einer unteren Grenze von 40 Gew.-% und einer oberen Grenze von 50 Gew.-%.

Es ist weiters möglich, dass diesem Gemisch weitere Additive zur Verbesserung der Verarbeitbarkeit, z.B. auf einem Extruder, zugegeben werden, wie diese aus dem Stand der Technik bekannt sind, bspw. Stearate, Wachse, wie z.B. Ester der Montansäuren, ebenso wie Viskositätsregler, Thermostabilisatoren, Schmiermittel, Weichmacher, Pigmente, Biozide, Flammschutzmittel, Farbstoffe, etc., wobei dieser Anteil z.B. ausgewählt sein kann aus einem Bereich mit einer unteren Grenze von 1 Gew.-% und einer oberen Grenze von 10 Gew.-%, bezogen auf das gesamte Gemisch. Ebenso können übliche Füllstoffe enthalten sein.

Das Versteifungsprofil 3 kann, wie dies in Fig. 1 gezeigt ist, zumindest einen Teil der Stege 5 der Hohlkammern 4 des Profilkörpers 2 des Hohlkammerprofils 1 ersetzen. Es ist dabei auch möglich, das Versteifungsprofil 3 über die verbleibenden Stege 5 des Profilkörpers 2 mit diesem zu verbinden, bspw. durch Schweißen verkleben, etc..

In einer Ausführungsvariante hierzu ist es möglich, dass die Stege 5 des Profilkörpers 2 nicht aus dem Kunststoff für diesen gebildet sind, sondern an dem Versteifungsprofil 3 angeformt und aus dessen Werkstoff gebildet sind.

In einer weiteren Ausführungsvariante hierzu ist es möglich, dass die Stege 5 des Profilkörpers 2 zur Gänze ausgebildet sind und dass das Versteifungsprofil 3 an diesen Stegen 5 anliegend oder beabstandet zu diesen in bzw. innerhalb des Profilkörpers 2 angeordnet ist.

Bevorzugt weist das Versteifungsprofil 3 eine Länge in Längserstreckung des Profilkörpers 2 auf die zumindest annähernd der Länge des Profilkörpers 2 in dieser Richtung entspricht. Es sind aber selbstverständlich auch Ausführungsvarianten möglich, bei denen sich das Versteifungsprofil 3 nur über einen Teilbereich der Länge des Profilkörpers 2 erstreckt.

Fig. 2 zeigt eine Ausführungsvariante des Hohlkammerprofils 1 zu jener nach Fig. 1, bei der innerhalb des Versteifungsprofils 3 eine profilartige metallische Aussteifung 7 angeordnet ist, bspw. in Form eines Stahl- oder Aluminiumprofils. Diese metallische Aussteifung 7 kann insbesondere dann verwendet bzw. eingesetzt werden, wenn das Hohlkammerprofil 1 für extrem schwere Gläser bzw. Glasverbundscheiben verwendet werden soll, um damit die Belastbarkeit des Hohlkammerprofils 1 zu verbessern. Diese metallische Aussteifung 7 kann jener entsprechen die bislang als Versteifungsprofil in herkömmlichen Hohlkammerprofilen 1 dieser Art eingesetzt wurden. Für normale Belastungsfälle kann im Rahmen der Erfindung jedoch auf diese metallische Aussteifung 7 verzichtet werden.

Die metallische Aussteifung 7 kann - im Querschnitt betrachtet - eine Breite aufweisen, die so groß ist, dass, wie dies in Fig. 2 gezeigt ist, die metallische Aussteifung 7 zumindest teilweise an inneren Oberflächen des Versteifungsprofils 3 anliegt. Es sind aber auch andere Querschnittsformen als jene nach Fig. 2 möglich, bspw. in Form von I-Trägern, X-Trägern, etc. auch eine - im Querschnitt betrachtet - geschlossene Form der Aussteifung 7 ist möglich.

Auch das Versteifungsprofil 3 kann im Rahmen der Erfindung andere als die gezeigten Querschnitte aufweisen, bspw. ebenfalls in Form eines I-Trägers, X-Trägers, etc. oder als U-Profilquerschnitt ausgebildet sein. Es muss also nicht ein geschlossener Querschnitt wie an diesen Figuren dargestellt ist ausgebildet werden, wenn gleich dies die bevorzugte Ausführungsvariante ist.

Das Versteifungsprofil 3 kann seinerseits auch als Hohlkammerprofil ausgebildet sein, wobei eine Hohlkammer 8 auch über entsprechende Stege 9 in einzelne voneinander getrennte Hohlkammern 8 unterteilt sein kann, wie dies in Fig. 3 dargestellt ist. Die Stege 9 können dabei vertikal ausgerichtet sein ebenso ist es möglich, das horizontale Stege 9 oder gegen die Horizontale geneigte Stege 9 vorgesehen werden bzw. sind auch sämtliche Kombinationen daraus möglich.

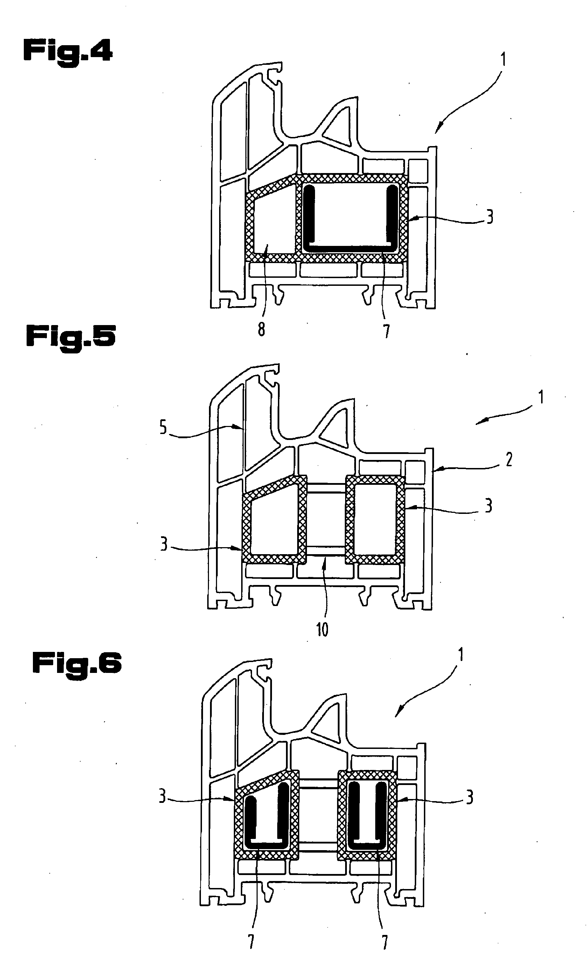

Weiters ist die Anzahl der Hohlkammern 8 variabel, es können also bspw. eine Hohlkammer 8 (Fig. 2), drei Hohlkammern 8 (Fig. 3) oder zwei Hohlkammern 8 (Fig. 4) bzw. auch mehr als drei Hohlkammern 8 ausgebildet werden.

Die Ausführungsvariante nach Fig. 4 des Hohlkammerprofils 1 zeigt ein Versteifungsprofil 3 mit zwei Hohlkammern 8, wobei innerhalb einer der Hohlkammern 8 wiederum die metallische Aussteifung 7 zur Erhöhung der Belastbarkeit des Hohlkammerprofils 1 angeordnet ist.

Fig. 5 zeigt eine Ausführungsvariante des Hohlkammerprofils 1 in dem zwei Versteifungsprofile 3 angeordnet sind. Wiederum ersetzen diese Versteifungsprofile 3, zumindest einen Teil der Stege 5 des Profilkörpers 2, bzw. sind über die verbleibenden Stege 5 mit dem Profilkörper 2 verbunden. Ebenso können diese beiden Versteifungsprofile 3 über Verbindungsstege 10 miteinander verbunden. Es wird damit eine bessere Lagefixierung der Versteifungsprofile 3 innerhalb des Profilkörpers 2 erreicht. Diese Verbindungsstege 10 können aus dem Werkstoff des Versteifungsprofils 3 hergestellt sein.

Selbstverständlich ist es möglich, auch mehr als zwei Versteifungsprofile 3 innerhalb des Profilkörpers 2 anzuordnen. Des Weiteren ist es nicht zwingend erforderlich, dass diese Versteifungsprofile 3 über die Verbindungsstege 10 miteinander verbunden sind.

Es sind auch Ausführungsvarianten möglich, bei denen eines der beiden Versteifungsprofile 3 sich über die gesamte Länge des Profilkörpers 2 des Hohlkammerprofils 1 erstreckt und das weitere Versteifungsprofil 3 nur in besonders belasteten Bereichen des Profilkörpers 2 angeordnet ist, bspw. in jenen Bereichen in denen Beschläge, etc. angeordnet werden.

Fig. 6 zeigt eine Ausführungsvariante zum Hohlkammerprofil 1 nach Fig. 5 bei der wiederum metallische Aussteifungen 7 innerhalb der Versteifungsprofile 3 angeordnet sind. Obwohl bei dieser Ausführungsvariante des Hohlkammerprofils 1 in beiden Versteifungsprofilen 3 diese metallischen Aussteifungen 7 angeordnet sind, besteht die Möglichkeit, dass in nur einem der Versteifungsprofile 3, oder wenn mehr als zwei Versteifungsprofile 3 angeordnet sind, in einigen davon derartige metallische Aussteifungen 7 angeordnet sind. Des Weiteren besteht auch die Möglichkeit, dass sich die Aussteifung 7 nur über einen Teilbereich der Länge des Profilkörpers 2 erstreckt, bspw. über jene Bereiche, in denen mit einer erhöhten Belastung gerechnet werden kann. Dies trifft selbstverständlich auch auf sämtliche weiteren Ausführungsvarianten zu bei denen derartige metallische Aussteifungen 7 vorgesehen sind.

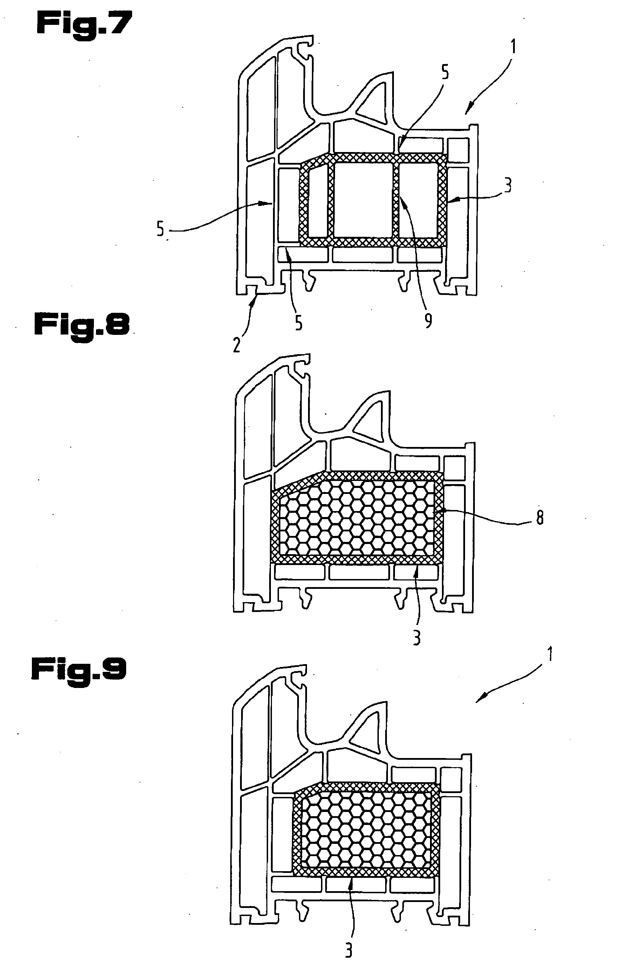

In Fig. 7 ist eine Ausführungsvariante des Hohlkammerprofils 1 gezeigt, bei der das Versteifungsprofil 3 derart im Profilkörper 2 angeordnet ist, dass dieses auf der rechten Seite einen Teil der Stege 5 ersetzt und auf der linken Seite beabstandet zu einem Steg 5 angeordnet ist und über horizontale Stege 5 mit diesem verbunden ist. Es soll damit verdeutlicht werden, dass die Lage des Versteifungsprofils 3 innerhalb des Profilkörpers 2 variieren und an die zu erwartenden Belastungen angepasst sein kann.

Die Ausführungsvariante nach Fig. 8 zeigt, dass das Versteifungsprofil 3 in der Hohlkammer 8 mit einem Schaumstoff ausgeschäumt sein kann, um damit die Wärmedämmung weiter zu verbessern.

Auch die Fig. 9 zeigt eine derartige Ausbildung des Hohlkammerprofils 1, wobei das Versteifungsprofil 3 hinsichtlich seiner Abmessungen und Anordnung, im Querschnitt betrachtet, jener nach Fig. 7 zumindest annähernd entspricht, jedoch ohne die beiden vertikalen Stege 9 nach Fig. 7.

Bei der Variante nach Fig. 10 sind in dem Hohlkammerprofil 1, das heißt dessen Profilkörper 2, wiederum zwei Versteifungsprofile 3 angeordnet, wobei zwischen diesen Versteifungsprofilen 3 in einer Hohlkammer 4 des Profilkörpers 2 ein Schaumstoff angeordnet ist, um damit die Wärmedämmung, d. h. den Wärmeübergang zwischen den beiden Versteifungsprofilen 3, und weiter zu verringern. Der Schaumstoff kann dabei nachträglich eingebracht bzw. in dieser Hohlkammer 4 aufgeschäumt werden.

Bei der Ausführungsvariante nach Ausführung 11 ist das Versteifungsprofil 3 zur Gänze - im Querschnitt betrachtet - von dem Schaustoff umgeben und über diesen lagepositioniert im Profilkörper 2. Erreicht kann dies beispielsweise dadurch werden, dass das Versteifungsprofil 3 d. h. dessen Oberfläche zumindest teilweise mit einem selbstaufschäumenden Rohstoff für einen Schaumstoff versehen wird, der nach dem Zusammenbau - sollten die beiden Profile, d. h. der Profilkörper 2 und das Versteifungsprofils 3 gesondert hergestellt werden, also nicht im Coextrusionsverfahren, beispielsweise durch Extrusion oder Spritzguss - aufgeschäumt wird. Auch eine beabstandete Halterung des Versteifungsprofil 3 von den inneren Oberflächen der Stege 5 des Profilkörpers 2 über Abstandshalter ist möglich, um damit den Zwischenraum zwischen dem Versteifungsprofil 3 und dem Stegen 5 bzw. Außenwänden 6 des Profilkörpers. 2 ausschäumen zu können.

In Fig. 12 ist eine Variante der Erfindung dargestellt, bei der der Profilkörper 2 des Hohlkammerprofils 1 einseitig - in diesem Fall auf der linken Seite - offen ist und das Versteifungsprofil 3 bis in den offenen Bereich ragt bzw. ebenflächig in diesem Bereich mit der Oberfläche des Profilkörpers 2 abschließt. Nach außen hin, also der Bewitterungsseite zugewandt, weist das Hohlkammerprofil 1 eine Verkleidung 11 auf, beispielsweise in Form einer Aluminiumschale. Die Verkleidung 11 kann dabei direkt an der Oberfläche des Profilkörpers und/oder des Versteifungsprofils 3, beispielsweise wenn dieses über den Profilkörper 2 seitlich vorragt, anliegend ausgebildet sein bzw., wie in Fig. 12 dargestellt, beabstandet und zu dieser Oberfläche angeordnet werden. Nach oben, d. h. in Richtung auf ein nicht dargestelltes Glaselement eines Fensters, ist diese Verkleidung 11 über den Profilkörper 2 vorstehend ausgebildet, wobei der Zwischenraum zwischen der inneren Oberfläche der Verkleidung 11 und der Oberfläche der Außenwand 6 des Profilkörpers 2 mit einem Schaumstoff versehen ist, um in diesem Bereich eine entsprechend niedrige Wärmeleitung bzw. niedrigen Wärmeübergang zu erhalten. Von der Bewitterungsseite abgewandt kann dieser Schaumstoff über ein eigenes Abdeckprofil 12 vor der Bewitterung geschützt werden. Dieses Abdeckprofil 12 kann beispielsweise auch eine entsprechende Gummidichtung oder dergleichen sein, die mit einer entsprechenden Verbindungseinrichtung 13 versehen ist, welche in eine Aufnehmung 14 der Verkleidung 11 eingreift.

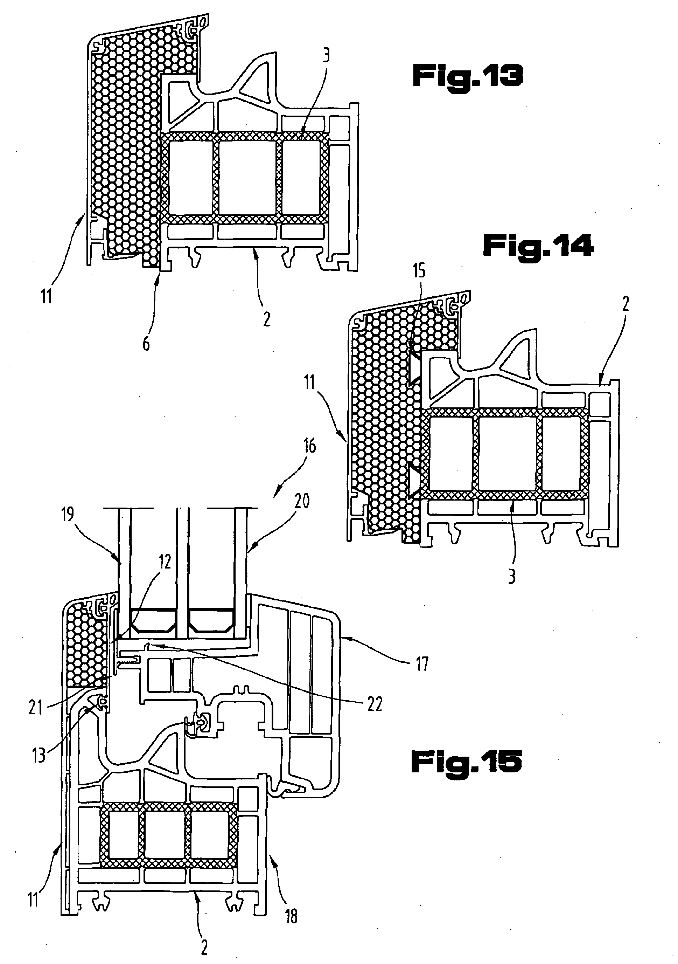

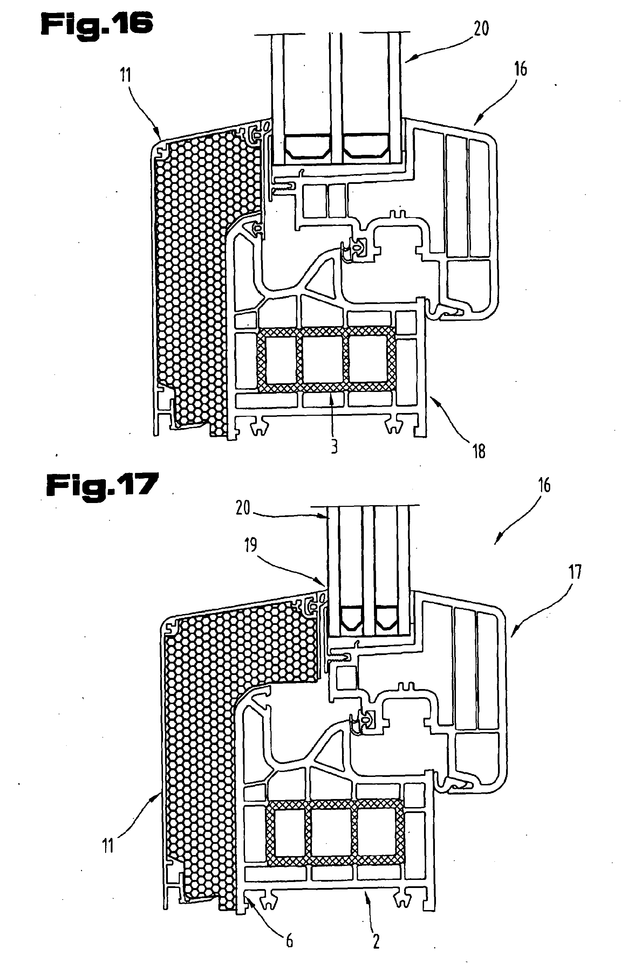

In einer Ausführungsvariante hierzu ist die Verkleidung 11 bei dem Beispiel nach Fig. 13 weiter beabstandet zu der äußeren Oberfläche des Profilkörpers 2, d. h. dessen Außenwand 6, und/ oder des Versteifungsprofils 3 angeordnet, wobei in diesem Zwischenraum wiederum ein Schaumstoff angeordnet ist. Über diesen Schaumstoff ist es gegebenenfalls auch unmöglich, die Verkleidung 11 adhäsiv mit dem Profilkörper 2 und/ oder dem Versteifungsprofil 3 zu verbinden. Hinsichtlich seiner Höhenerstreckung kann dabei das Profil der Verkleidung 11 wiederum über den Profilkörper 2 vorragen, so dass auch im Anschlagbereich für ein Glaselement, wie dies in Fig. 16 dargestellt ist, ein Schaumstoff angeordnet ist und damit eine bessere Wärmedämmung durch seitliche Abdeckung der üblicherweise metallischen Abstandshalter des Glaselementes erreicht wird, wie dies in Fig. 16 dargestellt ist.

Fig. 14 zeigt in einer Variante hierzu, dass auch eine mechanische Anbindung des Schaumstoffes mit der Verkleidung 11 an dem Profilkörper 2 und/ oder dem Versteifungsprofil 3 möglich ist, beispielsweise durch Ausbildung von schwalbenschwanzförmigen Vorsprüngen 15 an dem Profilkörper 2 und/ oder dem Versteifungsprofil 3. Es sind auch hier andere Ausführungsvarianten möglich bzw. kann gegebenenfalls der Schaumstoff direkt mit dem Profilkörper 2 und/ oder dem Versteifungsprofil 3 verschraubt werden insbesondere wenn entsprechende Halterungen im Schaumstoff eingeschäumt sind, die mit den Schrauben zusammenwirken können und damit die Auszugfestigkeit überhöhen bzw. das Ausbrechen des Schaumstoffes vermeiden.

In Fig. 15 ist ein gesamter Aufbau eines Fensters 16 ausschnittsweise im Querschnitt dargestellt mit einem Rahmenprofil 17 und einem Blendrahmenprofil 18, wobei dieses Blendrahmenprofil 18 jenem nach Fig. 12 entspricht, mit der Ausnahme, dass die Verkleidung 11 eine größere Höhe aufweist und damit im Glasfalzbereich 19 mehr Schaumstoff zur Verfügung steht, über den der Wärmeverlust über die Abstandhalter zwischen den einzelnen Glasflächen weiter verringert werden kann. Das Abdeckprofil 12 dient bei dieser Ausführungsvariante auch dazu, um über eine zusätzlichen untere Verbindungseinrichtung 13 mit einer entsprechenden Aussparung des Profilkörpers 2 in Eingriff gebracht werden zu können und eine Anbindung der Verkleidung 11 an dem Profilkörper 2 zu erreichen. Zudem bildet diese Verkleidung 11, wie bereits erwähnt, einen Anschlag für das Glaselement 20 aus, und der Glasfalz 19 selbst wird bei dieser Variante durch das Rahmenprofil 17 sowie ein auf dieses aufsteckbares Profilelement 21 gebildet.

Des weiteren ist am Grund des Glasfalzes 19 ein Vorsprung 22 vorgesehen um das Glaselement 20 beabstandet zu diesem Bodenbereich zu halten und damit den Randverbund besser ausbilden zu können. Entsprechende Dichtungen bzw. Dichtelemente an sich sind auch zwischen dem Rahmenprofil 17 und dem Profilelement 21 einerseits sowie dem Glaselement 20 andererseits, wie im Stand der Technik üblich, vorgesehen.

Die Höhe der Verkleidung 11 ist bei dieser Ausführungsvariante derart ausgebildet, dass der höchste Punkt auf gleiche Ebene mit dem höchsten Punkt des Rahmenprofils 17 bzw. einer Dichtung in diesem Bereich liegt. Es wird damit eine verbesserte Optik erreicht.

Durch diese Ausführungsvariante ist es weiters möglich, den Glaseinstand zu reduzieren, so dass die Glasfläche, die einsehbar ist, weiter erhöht werden kann.

Fig. 16 zeigt eine Ausführungsvariante zu der Variante nach Fig. 15 des Fensters 16 bei der als Blendrahmenprofil 18 jenes nach Fig. 14 verwendet wird. Durch die dickere Schaumstoffschicht im Bereich der Verkleidung 11 wird eine verbesserte Wärmedämmung erreicht, insbesondere auch im Bereich der Abstandhalter des Glaselementes 20.

Es sei an dieser Stelle erwähnt, dass einerseits die unterschiedlichsten Versteifungsprofile 3, die bereits vorab beschrieben wurden, bei diesen Fenstern 16 einsetzbar sind wobei die Versteifungsprofil 3 nicht nur im Blendrahmen 18 angeordnet werden können, sondern auch im Rahmenprofil 17 oder ausschließlich im Rahmenprofil 17 des Fensters 16.

Fig. 17 zeigt eine Variante eines Fensters 16, bei der das Rahmenprofil 17 dünner - im Querschnitt betrachtet - ausgeführt ist im Vergleich zur Ausführungsvariante nach Fig. 16, so dass also auch Glaselemente 20 unterschiedlicher Stärke eingesetzt werden können. Bei dieser Ausführungsvariante ist der Schaumstoff zwischen der Außenwand 6 des Profilkörpers 2 und der Verkleidung 11 im Bereich des Glasfalzes 19 breiter ausgeführt so dass wiederum eine bessere Wärmedämmung erreicht werden kann.

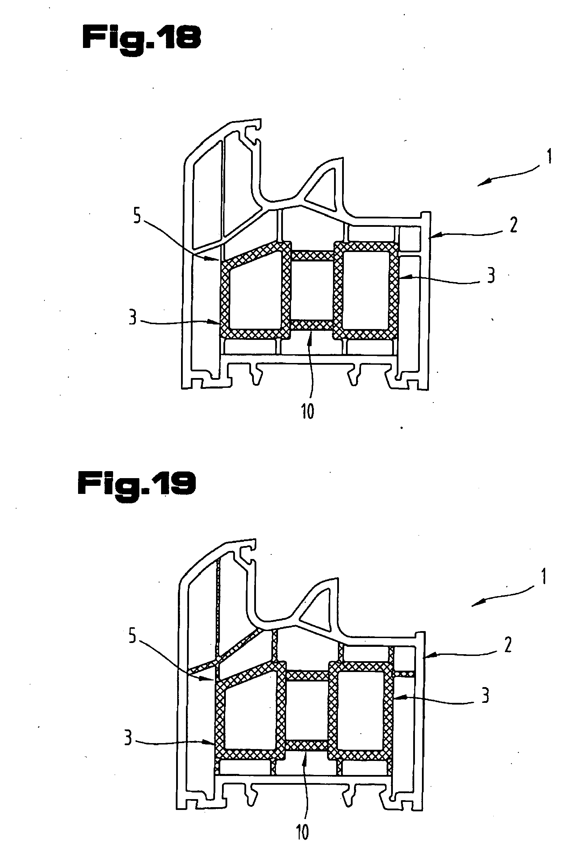

Fig. 18 zeigt eine Ausführungsvariante des Hohlkammerprofils 1, bei der die Verbindungsstege 10 zwischen den Versteifungsprofilen 3 ebenfalls aus dem Material der Versteifungsprofile 3, also WPC, bestehen.

Bei der Variante nach Fig. 19 ist sind die Versteifungsprofile 3 zusätzlich über Stege 5 an den Profilkörper 2 angebunden, die ebenfalls aus dem Material der Versteifungsprofile 3 bestehen.

In einer Mischvariante hierzu ist es möglich, einzelne Stege 5 und/oder einzelne der Verbindungsstege 10 aus dem Werkstoff des Profilkörpers 2 zu bilden, also z.B. aus PVC, um in bestimmten Positionen eine bessere Statik zu erreichen auf der anderen Seite um Kosten zu sparen, und die restlichen Stege 5 und/oder Verbindungsstege 10 aus dem Werkstoff des Versteifungsprofils 3.

Das erfindungsgemäße Hohlkammerprofil 1 kann wie bereits erwähnt durch Extrusion hergestellt werden ebenso wie das Versteifungsprofil 3. Diese beiden Teile können ineinander geschoben werden um das fertige Hohlkammerprofil 1 herzustellen. Andererseits ist es auch möglich Spritzgussverfahren anzuwenden. Ebenso und bevorzugt kann das Hohlkammerprofil 1 durch ein Coextrusionsverfahren hergestellt werden bei dem der Profilkörper 2 und das Versteifungsprofil 3 bzw. die Verseifungsprofile 3 gleichzeitig hergestellt werden, so dass eine nachträgliche Anbringung des Versteifungsprofils 3 in dem Profilkörper 2 nicht mehr notwendig ist. Bei dieser Ausführungsvariante ist auch eine direkte Anbindung des Versteifungsprofils 3 im Profilkörper 2 an dessen Werkstoff möglich, wie dies ebenfalls bereits vorab beschrieben wurde.

Weiters ist es möglich, dass die metallische Aussteifung nach der Herstellung des Profilkörpers 2 und des Versteifungsprofils 3 bzw. mit dem Versteifungsprofil 3 in letzteres eingeschoben wird ebenso ist eine direkte Fertigung möglich durch entsprechende Zufuhr des Profils für die metallische Aussteifung 7 zur formgebenden Düse für das Versteifungsprofil 3 und/ oder des Profilkörpers 2.

Bevorzugt werden als Naturstoffteilchen Holzfasern verwendet, wobei diese Holzfasern insbesondere großteils in Richtung der Längserstreckung des Hohlkammerprofils 1 zumindest annähernd orientiert sind, also eine deutliche Orientierung in dieser Richtung erkennen lassen. Es bedeutet jedoch nicht, dass sämtliche Fasern parallel zu dieser Richtung ausgerichtet sein müssen. Der Anteil an Fasern die in dieser Richtung orientiert sind ist bevorzugt ausgewählt aus einem Bereich mit der unteren Grenze 70 % und einer oberen Grenze von 90 % bezogen auf den gesamten Fasergehalt. Mit dieser Ausführungsvariante wird die mechanische Belastbarkeit, insbesondere Zugfestigkeit, etc. des Hohlkammerprofils 1 weiter verbessert. Erreicht kann diese Orientierung beispielsweise dadurch werden, indem diese Fasern in einer orientierten Lage der Mischeinrichtung zur Herstellung des Versteifungsprofils 3 zugeführt werden wobei diese Orientierung im Extruder weiter erhöht werden kann.

Durch die Anbindung über die Stege 5 des Profilkörpers 2 während der Herstellung des Hohlkammerprofils kann eine nachträgliche Anbindung des Versteifungsprofils 3 an den Profilkörper entfallen und kann damit die mechanische Belastbarkeit auch erhöht werden. Es wird damit auch eine geringere Wärmeausdehnung erzielt.

Bei den Varianten bei denen das Versteifungsprofil 3 innerhalb des Profilkörpers 2 angeordnet ist bzw. bei jenen Varianten, bei denen das Versteifungsprofil 3 gegen die Bewitterungsseite über die Verkleidung 11 oder die mit dem Schaumstoff versehene Verkleidung 11 abgedeckt ist, wird der Vorteil erreicht, das die Polymermischung für das Versteifungsprofil 3 keine entsprechenden Stabilisatoren enthalten muss.

Der Schaumstoff zum Ausschäumen der Hohlkammern 4, 8 kann auch über ein nachträglich aufschäumbares Bandmaterial eingebracht werden, wie dieses aus dem Stand der Technik bekannt ist. Ebenso ist es möglich bereits fertige Schaumstoffprofile in das Hohlkammerprofil 1 einzuschieben.

Als Schaumstoff kann z.B. ein PU- oder PS-Schaumstoff verwendet werden.

Die Ausführungsbeispiele zeigen mögliche Ausführungsvarianten des Hohlkammerprofils 1, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Hohlkammerprofils 1 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3; 4; 5; 6; 7, 8; 9; 10; 11; 12; 13; 14; 15; 16; 17; 18; 19 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Hohlkammerprofil
- 2: Profilkörper
- 3: Versteifungsprofil
- 4: Hohlkammer
- 5: Steg

- 6: Außenwand
- 7: Aussteifung
- 8: Hohlkammer
- 9: Steg
- 10: Verbindungssteg

- 11: Verkleidung
- 12: Abdeckprofil
- 13: Verbindungseinrichtung
- 14: Ausnehmung
- 15: Vorsprung

- 16: Fenster
- 17: Rahmenprofil
- 18: Blendrahmenprofil
- 19: Glasfalzbereich
- 20: Glaselement

- 21: Profilelement
- 22: Vorsprung

## Patentansprüche

1. Hohlkammerprofil (1) mit einem Profilkörper (2) aus Kunststoff, in dem ein Versteifungsprofil (3) angeordnet ist, **dadurch gekennzeichnet, dass** das Versteifungsprofil (3) aus einem mit Naturstoffteilchen, ausgewählt aus einer Gruppe umfassen Holz, Cellulose, Sisal, Manila, Hanf, Jute, verstärkten Kunststoff gebildet ist.

2. Hohlkammerprofil (1) nach Anspruch 1, **dadurch gekennzeichnet, dass** das Versteifungsprofil (3) ebenfalls ein Hohlkammerprofil ist.

3. Hohlkammerprofil (1) nach Anspruch 1 oder 2, **dadurch gekennzeichnet, dass** in dem Profilkörper (3) zumindest zwei Versteifungsprofile (3) angeordnet sind.

4. Hohlkammerprofil (1) nach Anspruch 3, **dadurch gekennzeichnet, dass** die zumindest zwei Versteifungsprofile (3) zueinander beabstandet im Profilkörper (2) angeordnet sind.

5. Hohlkammerprofil (1) nach Anspruch 3 oder 4, **dadurch gekennzeichnet, dass** die zumindest zwei Versteifungsprofile (3) miteinander verbunden sind.

6. Hohlkammerprofil (1) nach einem der Ansprüche 1 bis 5, **dadurch gekennzeichnet, dass** an zumindest einer Oberfläche des Versteifungsprofils (3) ein Schaumstoff angeordnet ist, insbesondere mit dem Versteifungsprofil (3) verbunden ist.

7. Hohlkammerprofil (1) nach Anspruch 6, **dadurch gekennzeichnet, dass** zwischen dem Versteifungsprofil (3) und dem Profilkörper (2) zumindest ein Zwischenraum ausgebildet ist, der von dem Schaumstoff zumindest annähernd vollständig ausgefüllt ist.

8. Hohlkammerprofil (1) nach einem der Ansprüche 1 bis 7, **dadurch gekennzeichnet, dass** das oder die Versteifungsprofil(e) (3) mit dem Profilkörper (2) verbunden sind.

9. Hohlkammerprofil (1) nach einem der Ansprüche 1 bis 8, **dadurch gekennzeichnet, dass** in dem oder den Versteifungsprofil(en) (3) zumindest eine metallische Aussteifung (7) angeordnet ist.

10. Hohlkammerprofil (1) nach einem der Ansprüche 1 bis 9, **dadurch gekennzeichnet, dass** der Profilkörper (2) und/oder das bzw. die Versteifungsprofil(e) (3) zumindest teilweise ausgeschäumt sind.

11. Hohlkammerprofil (1) nach einem der Ansprüche 1 bis 10, **dadurch gekennzeichnet, dass** das oder die Versteifungsprofil(e) (3) zumindest teilweise eine Wandstärke aufweist bzw. aufweisen, im Querschnitt betrachtet, die zwischen 80 % und 150 % der Wandstärke der Außenwände (6) des Profilkörpers (2) beträgt.

12. Fenster (16) mit einem Fensterrahmen, in dem ein Glaselement (20) gehaltert ist, wobei der Fensterrahmen durch ein Hohlkammerprofil (1) gebildet ist, **dadurch gekennzeichnet, dass** das Hohlkammerprofil (1) entsprechend einem der Ansprüche 1 bis 11 ausgebildet ist.

13. Tür mit einem Türrahmen der durch ein Hohlkammerprofil (1) gebildet ist, **dadurch gekennzeichnet, dass** das Hohlkammerprofil (1) entsprechend einem der Ansprüche 1 bis 11 ausgebildet ist.

14. Blendrahmen für ein Fenster (16) oder eine Tür aus einem Hohlkammerprofil (1), **dadurch gekennzeichnet, dass** das Hohlkammerprofil (1) entsprechend einem der Ansprüche 1 bis 11 ausgebildet ist.
